# EUROPÄISCHE PATENTSCHRIFT

(11) **EP 2 345 245 B1**
(45) Veröffentlichungstag und Bekanntmachung des Hinweises auf die Patenterteilung: **27.08.2014**
(21) Anmeldenummer: 09778707.1
(22) Anmeldetag: 24.09.2009
(51) Int. Cl.: H04N 7/15, H04L 29/06

(54) **VERFAHREN UND ANORDNUNG ZUM ANBINDEN ZUMINDEST EINER MENSCH-MASCHINE-SCHNITTSTELLE ZUR MANIPULATION VON ZUMINDEST EINER IM RAHMEN VON VIDEOKONFERENZEN MIT EINEM VIDEOKONFERENZSYSTEM VERBUNDENEN DATENQUELLE**
METHOD AND ARRANGEMENT FOR CONNECTING AT LEAST ONE MAN-MACHINE INTERFACE FOR MANIPULATING AT LEAST ONE DATA SOURCE CONNECTED TO A VIDEO CONFERENCING SYSTEM WITHIN THE SCOPE OF VIDEO CONFERENCES
PROCÉDÉ ET SYSTÈME POUR RELIER AU MOINS UNE INTERFACE HOMME-MACHINE AFIN DE MANIPULER AU MOINS UNE SOURCE DE DONNÉES CONNECTÉE À UN SYSTÈME DE VISIOCONFÉRENCE DANS LE CADRE DE VISIOCONFÉRENCES

(30) Priorität: 30.09.2008 DE 102008049715
(43) Veröffentlichungstag der Anmeldung: 20.07.2011
(73) Patentinhaber: Unify GmbH & Co. KG, 81379 München (DE)
(72) Erfinder: OERTEL, Norbert, 84032 Landshut (DE)
(74) Vertreter: Fritzsche, Thomas
(86) Internationale Anmeldenummer: PCT/EP2009/006913
(87) Internationale Veröffentlichungsnummer: WO 2010/037501

(56) Entgegenhaltungen:
- EP-A2- 1 814 330
- WO-A1-03/063484
- US-A1- 2006 077 252
- US-B1- 7 321 384
- "Packet-based multimedia communications systems; H.323 Annex Q (07/01); Far-end camera control and H.281/H.224" ITU-T STANDARD SUPERSEDED (S), INTERNATIONAL TELECOMMUNICATION UNION, GENEVA, CH, Nr. H.323 Annex Q (07/01, 1. Juli 2001 (2001-07-01), XP017401476
- "A far end camera control protocol for videoconferences using H.224; H.281 (11/94)" ITU-T STANDARD IN FORCE (I), INTERNATIONAL TELECOMMUNICATION UNION, GENEVA, CH, Nr. H.281 (11/94), 1. November 1994 (1994-11-01), XP017401454
- "A real time control protocol for simplex applications using the H.221 LSD/HSD/MLP channels; H.224 (01/05)" ITU-T STANDARD IN FORCE (I), INTERNATIONAL TELECOMMUNICATION UNION, GENEVA, CH, Nr. H.224 (01/05), 8. Januar 2005 (2005-01-08) , XP017401320

## Beschreibung

Die Erfindung betrifft ein Verfahren zum Anbinden zumindest einer Mensch-Maschine-Schnittstelle zur Manipulation von zumindest einer im Rahmen von Videokonferenzen mit einem Videokonferenzsystem verbundenen Datenquelle gemäß dem Oberbegriff des Anspruchs 1 sowie eine Anordnung zum Anbinden zumindest einer Mensch-Maschine-Schnittstelle zur Manipulation von zumindest einer im Rahmen von Videokonferenzen mit einem Videokonferenzsystem verbundenen Datenquelle gemäß dem Oberbegriff des Anspruchs 10.

Es ist bekannt zur Kommunikation mit fernen Gesprächspartnern neben der Sprache auch Bilddaten, insbesondere Videodaten, zu übertragen, um Konferenzen zu realisieren. Hierzu existieren so genannte Videokonferenz-Raumsysteme, die im Wesentlichen den Standards H.320, H.323 und/oder H.324 folgen.

Nachteil bei den auf diesen Standards basierenden Videokonferenzen ist die mangelnde Möglichkeit auch visuell darstellbare Dateninhalte gemeinsam zu betrachten.

Hierzu ist als eine Erweiterung der Standard H.239 (auch unter den Stichworten "People+Content" und "DualVideo") bekannt, der es ermöglicht, beispielsweise Folien oder andere visuelle Inhalte mit Hilfe eines zweiten Videostromes unter den Konferenzteilnehmern zu verteilen und gemeinsam zu betrachten.

Ein gemeinsames Arbeiten ist damit allerdings noch nicht in dem Maße möglich, wie es bei einer Konferenz der Fall wäre, bei der sich die Beteiligten alle vor Ort aufhalten.

Aus der US 7,321,384 B1 ist ein Verfahren und eine Vorrichtung bekannt, um in einer Mehrpunkt-Videokonferenzumgebung eine Teilnehmer- und Layout-Auswahl unter Verwendung von Kamerafernsteuerungsnachrichten (FECC) durchzuführen. Aus der WO 03/063484 A1 ist es bekannt, ein Kamerafernsteuerungssignal zur Übertragung einer Benutzeranfrage an eine Videosteuereinheit zu übertragen.

Aus der US 2006/0077252 A1 ist es bekannt, eine Kamerafernsteuerungseinrichtung zur Fernsteuerung einer Kamera und einer Videokonferenzaufzeichnung zu verwenden.

Aus der EP 1 814 330 A2 ist ebenfalls eine Kamerafernsteuerung bekannt.

Zur Ergänzung wird auf die Standards zur Kamerafernsteuerung H.281 und H.224 verwiesen.

Die der Erfindung zugrunde liegende Aufgabe ist es, ein Verfahren sowie eine Anordnung anzugeben, die die oben genannten Nachteile behebt.

Gelöst wird diese Aufgabe durch ein Verfahren mit den Merkmalen des Anspruchs 1 sowie durch eine Anordnung mit den Merkmalen des Anspruchs 10.

Nach einem Gesichtspunkt der Erfindung wird ein Verfahren zum Anbinden zumindest einer Mensch-Maschine-Schnittstelle zur Manipulation, insbesondere Fernmanipulation, von zumindest einer im Rahmen von Videokonferenzen mit einem Videokonferenzsystem verbundenen Datenquelle, bei dem von der Mensch-Maschine-Schnittstelle generierte Signale zum Manipulieren von Applikationsdaten, die in der Datenquelle gespeichert sind, über einen für die Steuerung einer Videokamera vorgesehenen Übertragungskanal an das Videokonferenzsystem übermittelt werden.

Durch das erfindungsgemäße Verfahren werden bestehende Mensch-Maschine-Schnittstellen in die Videokonferenzsysteme integriert und zudem ein Rückkanal zu der Datenquelle geschaffen, so dass "shared working" ermöglicht wird. Ein weiterer Vorteil des erfindungsgemäßen Verfahrens liegt in der einfachen Realisierung, die es ermöglicht, den Rückkanal in aus dem Stand der Technik bekannte Raumsysteme zu implementieren, was bislang trotz des hierfür bekannten Standards T.120 nicht möglich war, da dieser für eine Implementierung in Raumsysteme eine zu hohe Komplexität aufweist.

Wird das erfindungsgemäße Verfahren derart weitergebildet, dass als Mensch-Maschine-Schnittstelle eine dem Videokonferenzsystem zugeordnete Mensch-Maschine-Schnittstelle verwendet wird, so wird eine von zentraler Stelle aus geleitete Bedienung der, insbesondere fern angeordneten, Datenquellen realisiert.

Alternativ oder ergänzend kann bei einer Weiterbildung der Erfindung als Mensch-Maschine-Schnittstelle eine einem Teilnehmer-Endgerät des Videokonferenzsystems zugeordnete Mensch-Maschine-Schnittstelle, wie beispielsweise eine Funktastatur oder Funkmaus, verwendet werden. Dies ermöglicht die Bedienung der Datenquelle durch einen der Teilnehmer.

Ist das Teilnehmer-Endgerät bereits für eine Bedienung geeignet, weil es beispielsweise eine alphanumerische Tastatur aufweist oder Sprachsteuerung durch Spracherkennung ermöglicht, so wird vorzugsweise als Mensch-Maschine-Schnittstelle ein Teilnehmer-Endgerät des Videokonferenzsystems verwendet.

Vorzugsweise wird die Erfindung derart weitergebildet, dass der Übertragungskanal gemäß dem "Far End Camera Control" FECC, insbesondere mit Hilfe des H.281 und/oder H.224 Protokolls, betrieben wird. Hierdurch lässt sich die Erfindung vereinfacht implementieren und ist aufgrund der weiten Verbreitung dieser Standards bei den gängigen Geräten bzw. Systemen ohne große Anpassungen einsetzbar.

Vorzugsweise leitet das Videokonferenzsystem die empfangenen Signale an die zumindest eine Datenquelle weiter, so dass vor allem fern angeordnete Datenquellen durch Teilnehmer der Konferenz bedient werden können.

Bei einer weiteren vorteilhaften Weiterbildung werden die Signale durch eine der Datenquelle zugeordnete Decodierungsvorrichtung derart decodiert, dass die Signale aus einem gemäß einem Übertragungsprotokoll des Übertragungskanals auf dem Übertragungskanal übertragenen Datenstrom extrahiert und der Manipulation zugrunde gelegt werden. Hierdurch lassen sich weitere vorteilhafte Effekte wie beispielsweise ein Multiplex mehrerer Signale, die Bildung virtueller Kanäle auf dem Kamerasteuerungskanal und nicht zuletzt die Einkapselung von Bedienkommandos in die seitens des Übertragungsprotokolls geforderte Form unterstützen.

Vorzugsweise wird der Datenquelle eine Codierungsvorrichtung derart zugeordnet, dass dem Datenstrom des Übertragungskanals im Rahmen der Manipulation erforderliche Rückmeldungen für die Signalquelle beigefügt werden. Hierdurch lassen sich Fehler- und Kommunikationsprotokolle implementieren, die die (Fern-)Bedienung störungsresistenter macht.

Von Vorteil ist auch die Weiterbildung gemäß der die Datenquelle die auf den Übertragungskanal beruhende Manipulierbarkeit über einen Videokanal des Videokonferenzsystems signalisiert. Hierdurch können Teilnehmer-Engeräte, die dieses Verfahren unterstützen, den Nutzern dieses Dienstmerkmal entsprechend zur Kenntnis bringen.

Ein weiterer Gesichtspunkt der Erfindung betrifft eine Anordnung zum Anbinden zumindest einer Mensch-Maschine-Schnittstelle zur Manipulation, insbesondere Fernmanipulation, von zumindest einer im Rahmen von Videokonferenzen mit einem Videokonferenzsystem verbundenen Datenquelle, bei welcher von der Mensch-Maschine-Schnittstelle generierte Signale zur Manipulation von Applikationsdaten, die in der Datenquelle gespeichert sind, über einen für die Steuerung einer Videokamera vorgesehenen Übertragungskanal an das Videokonferenzsystem übermittelt werden.

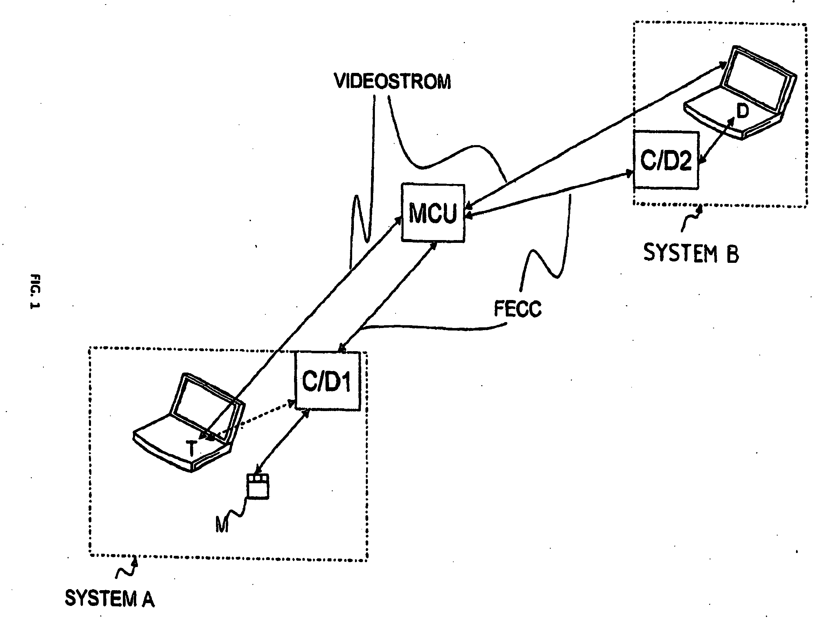

Weitere Vorteile sowie Details der Erfindung werden anhand eines in der einzigen Figur dargestellten Ausführungsbeispiels der Erfindung nachfolgend näher erläutert. Dabei zeigt die einzige Figur (Fig. 1) schematisch vereinfacht den Ablauf des Manipulierens gemäß einem Ausführungsbeispiel des erfindungsgemäßen Verfahrens und einer sie durchführenden Anordnung.

In der Figur ist als ein Ausführungsbeispiel der Erfindung ein das erfindungsgemäße Verfahren ausführendes als Raumsystem realisiertes Videokonferenzsystem dargestellt. Dieses System besteht aus einem das Raumsystem zur Verfügung stellenden steuernden Videokonferenzgerät MCU, sowie einem ersten Teilnehmer-Endgerät SYSTEM_A und einem zweiten Teilnehmer-Endgerät SYSTEM_B.

Beide Teilnehmer-Endgeräte SYSTEM_A, SYSTEM_B sollen dem Ausführungsbeispiel der erfindungsgemäßen Anordnung folgend als Laptops ausgestaltet sein.

Das erste Teilnehmer-Endgerät SYSTEM_A soll bei dem dargestellten Szenario die Rolle einer eine Datenquelle D des Videokonferenzsystems fernsteuernden Einrichtung zukommen.

Die Datenquelle D ist dabei bei dem dargestellten Ausführungsbeispiel der dem zweiten Teilnehmer-Endgerät SYSTEM_ B zugeordnete Laptopspeicher, wobei die zu manipulierenden Daten Applikationsdaten sein sollen, die die Konferenzteilnehmer gemeinsam bearbeiten.

Für die Fernsteuerung stehen dem ersten Teilnehmer-Endgerät SYSTEM A eine (Funk-)Maus M sowie die im Laptop typischer Weise vorhandene Tastatur T zur Verfügung.

Gemäß dem dargestellten Beispiel soll dabei die Maus M aktuell eine Aktion durchführen, welches als Ereignis (Interruptsteuerung) erfasst und ausgewertet wird.

Die Bewegung der Maus M stellt ein Kommando dar, welches die Anwendung, genauer gesagt den Mausanzeiger der Anwendung, steuert.

Hierzu erfolgt gemäß dem erfindungsgemäßen Ausführungsbeispiel lokal im ersten Teilnehmer-Endgerät SYSTEM_A durch einen auf dem Laptop ausgeführten Prozess C/D1 eine Umwandlung des Kommandos derart, dass es als gemäß einem Far End Camera Control Protokoll gebildetes Kommando über einen eigentlich für eine Videokamerasteuerung gedachten Kanal an das steuernde Gerät MCU übertragen wird, welches dieses dann in einem weiteren Schritt an das an einer Videokonferenz-Session beteiligte zu bedienende Teilnehmer-Endgerät übermittelt wird. Im vorliegenden Beispiel dem zweiten Teilnehmer-Endgerät SYSTEM_B.

Damit die gewünschte Bedienung durchgeführt werden kann, werden gemäß dem Beispiel der Erfindung seitens des zweiten Teilnehmer-Endgeräts SYSTEM_B auf dem Kamerasteuerungskanal empfangene Daten einem ebenfalls auf dem Laptop ablaufenden zweiten Umsetzerprozess C/D2 zugeführt.

Der zweite Umsetzerprozess C/D2 detektiert und dekodiert gemäß dem Szenario das der Mausbewegung entsprechende Kommando und wandelt es in die Signale um, die eine am Laptop angeschlossene Maus analog erzeugen würde, so dass die auf dem Laptop laufende Anwendung entsprechend gesteuert wird, d.h. der Mauszeiger entsprechend der von der Maus M ausgeführten Bewegung seine Position verändert.

Zu erkennen ist also, dass aufgrund der Erfindung, die sonst typischer Weise mittels Sprache an eine Person weitergegebenen Anweisungen zur Änderung der Position des Mauszeigers (oder anderer Aktionen zur Bedienung der Anwendung), welche das gemeinsam betrachtete und bearbeitete Dokument dann vor Ort manipuliert, nicht mehr nötig sind. Diese ineffiziente, fehleranfällige und zeitraubende vorgehensweise wird somit durch die Erfindung auf vorteilhafte Weise ersetzt.

Das erfindungsgemäße Ausführungsbeispiel zeigt, dass mit bereits heute verfügbarer Videoconferencing-Infrastruktur es möglich ist, Bedienungsaktionen neben dem Audio-, Video- und Präsentationsstrom zu übertragen, in dem einfach ein Kanal, der sonst zur Steuerung der entfernten Kamera geöffnet wird ("Far End Camera Control" FECC, H.281 über H.224), genutzt wird.

Die gängigen steuernden Geräte (Multipoint Control Unit), wie das Gerät MCU gemäß dem Beispiel, sind typischer Weise in der Lage diese vom ersten Teilnehmer-Endgerät SYSTEM_A empfangenen Kommandos an das an der Konferenz beteiligte zweite Teilnehmer-Endgerät System_B weiterzuleiten, wobei dieses hierzu zuvor vom ersten Teilnehmer-Endgerät SYSTEM_A ausgewählt wurde.

Das erste Teilnehmer-Endgerät SYSTEM_A gemäß dem Ausführungsbeispiel der Erfindung hat neben der Maus M auch eine Tastatur, von der (Interrupt-) Ereignisse (Events) ausgelöst werden können (daher gestrichelt dargestellt). Auch diese Events werden wie oben erläutert als FECC-Kommandos codiert und über den ausgehandelten FECC Kanal an das zweite Teilnehmer-Endgerät SYSTEM_B gesendet.

Der im zweiten Teilnehmer-Endgerät SYSTEM_B vorhandene Decoder C/D2 extrahiert auch hierfür aus dem FECC Kommandostrom die entsprechenden Tastaturevents und gibt diese lokal wieder. Dadurch ist es dem ersten Teilnehmer-Endgerät SYSTEM_A möglich, über einen über das Videokonferenzsystem verteilten Datenstrom Tastatur- und Mauseingaben auf dem zweiten Teilnehmer-Endgerät SYSTEM_B zu tätigen. Das zweite Teilnehmer-Endgerät SYSTEM_B kann ergänzend zu dem erläuterten Beispiel mit Hilfe von FECC ein Rückkanalprotokoll implementieren, um z.B. erhaltene Daten zu bestätigen oder erneut anzufordern.

Eine weitere nicht dargestellte Weiterbildung beinhaltet, dass das zweite Teilnehmer-Endgerät SYSTEM_B eine Möglichkeit vorsieht, den Nutzer darüber entscheiden zu lassen, von welchem beteiligten System Tastatur- und Mauskommandos zulässig sind. Dazu wird gemäß der Weiterbildung eine eingehende Steueranfrage über den FECC Kanal erkannt, eine Meldung an den Benutzer abgegeben und auf dessen Antwort gewartet.

Das zweite Teilnehmer-Endgerät SYSTEM_B, welches ein Laptop (Notebook)ist, realisiert seine Videokonferenzfunktion mit einer Software, die über H.323 eine Verbindung zum Videokonferenzsystem MCU aufbaut.

Über den Videostrom kann bei einer nicht dargestellten Variante ein visueller Prompt wiedergegeben werden, der dem ersten Teilnehmer-Endgerät SYSTEM_A mitteilt, dass es Tastatur- und Mausevents über den FECC Kanal akzeptiert. Hierdurch lässt sich das zweite Teilnehmer-Endgerät SYSTEM_B von anderen Systemen unterscheiden, die diese Option nicht bieten.

Dies lässt sich erfindungsgemäß weiterbilden in der Art, dass dieser visuelle Prompt auch Informationen darüber beinhalten kann, welches Raumsystem den zur Präsentation zugehörigen Audio- und Videostrom zur Verfügung stellt. Dies kann z.B. über eine maschinenlesbare Darstellung der Rufnummer dieses Teilnehmers erfolgen.

Das zentrale Gerät MCU kann ferner eine Einheit zur Erkennung dieser Darstellung besitzen und automatisch basierend auf dieser Information eine Zuordnung vornehmen und den entsprechenden Sprecher besonders hervorheben oder darstellen.

Das erste Teilnehmer-Endgerät SYSTEM_A könnte direkt in ein Raumsystem integriert sein, jedoch wäre es auch denkbar, dass es sich dabei um ein separates Gerät handelt, welches somit auch eine eigene H.323 Verbindung zum Konferenzsystem öffnen kann.

Weitere nicht dargestellte Ausführungsformen könnten sein, dass das erste Teilnehmer-Endgerät SYSTEM_A als ein tastaturähnliches Gerät mit eingebautem Trackball ausgestaltet ist, das via WLAN mit einem lokalen Netzwerk verbunden ist. Des Weiteren könnte es so ausgestaltet sein, dass es ein eingebettetes System besitzt, welches in der Lage ist, mit Hilfe von H.323 eine Verbindung zum Videokonferenzsystem aufzubauen und gemäß der Erfindung Tastatur- und Mausevents über den FECC Kanal zu senden.

Alternativ kann die Funktionalität des ersten Teilnehmer-Endgerätes SYSTEM_A direkt als Hardware oder Software in ein Videokonferenz-Raumsystem integriert sein und die Tastatur- und Mausevents über angeschlossene USB Geräte empfangen.

Eine weitere Variante besteht darin, dass das zweite Teilnehmer-Endgerät SYSTEM_B ein Softwareprodukt ist, welches auf einem beliebigen gebräuchlichen Notebook installiert werden kann und welches die erfindungsgemäße Funktionalität implementiert.

Alternativ könnte die Funktionalität in ein Videokonferenz-Raumsystem integriert sein, das über USB mit einem Notebook verbunden ist und über eine emulierte USB-Maus bzw. -Tastatur die empfangenen Events an das Notebook weiterreicht. In diesem Falle wäre keine Softwareinstallation auf dem Nötebook nötig, wodurch diese Ausführung besonders vorteilhaft wird.

Allen Weiterbildungen ist gemein, dass sie auf vorteilhafte Weise realisieren, dass Tastatur- und Mausevents übertragen werden können ohne eine separate Kommunikationsbeziehung zwischen dem Teilnehmer-Endgerät SYSTEM_A und dem zweiten Teilnehmer-Endgerät SYSTEM_B öffnen zu müssen. Dies ist zudem ohne direkte IP Verbindung unmöglich.

## Patentansprüche

1. Verfahren zum Anbinden zumindest einer Mensch-Maschine-Schnittstelle (SYSTEM_A; T; M) zur Manipulation, insbesondere Fernmanipulation, von zumindest einer im Rahmen von Videokonferenzen mit einem Videokonferenzsystem verbundenen Datenquelle (D), **dadurch gekennzeichnet, dass** von der Mensch-Maschine-Schnittstelle generierte Signale zur Manipulation von Applikationsdaten, die in der Datenquelle (D) gespeichert sind und die die Konferenzteilnehmer gemeinsam bearbeiten können, über einen für die Steuerung einer Videokamera vorgesehenen Übertragungskanal, der gemäß einem "Far End Camera Control" (FECC) Protokoll betrieben wird, an das Videokonferenzsystem übermittelt werden.

2. Verfahren nach Anspruch 1, **dadurch gekennzeichnet, dass** als Mensch-Maschine-Schnittstelle eine dem Videokonferenzsystem zugeordnete Mensch-Maschine-Schnittstelle (SYSTEM_A; T; M) verwendet wird.

3. Verfahren nach Anspruch 1 oder 2, **dadurch gekennzeichnet, dass** als Mensch-Maschine-Schnittstelle eine einem Teilnehmer-Endgerät des Videokonferenzsystems zugeordnete Mensch-Maschine-Schnittstelle (T; M) verwendet wird.

4. Verfahren nach einem der Ansprüche 1 bis 3, **dadurch gekennzeichnet, dass** als Mensch-Maschine-Schnittstelle ein Teilnehmer-Endgerät (SYSTEM_A) des Videokonferenzsystems verwendet wird.

5. Verfahren nach einem der vorhergehenden Ansprüche, **dadurch gekennzeichnet, dass** der Übertragungskanal mit Hilfe des H.281 und/oder H.224 Protokolls betrieben wird.

6. Verfahren nach einem der vorhergehenden Ansprüche, **dadurch gekennzeichnet, dass** das Videokonferenzsystem die empfangenen Signale an die zumindest eine Datenquelle (D) weiterleitet.

7. Verfahren nach Anspruch 6, **dadurch gekennzeichnet, dass** die Signale durch eine der Datenquelle (D) zugeordnete Decodierungsvorrichtung (C/D2) derart decodiert werden, dass die Signale aus einem gemäß einem Übertragungsprotokoll des Übertragungskanals auf dem Übertragungskanal übertragenen Datenstrom extrahiert und der Manipulation zugrunde gelegt werden.

8. Verfahren nach Anspruch 7, **dadurch gekennzeichnet, dass** der Datenquelle (D) eine Codierungsvorrichtung (C/D2) derart zugeordnet wird, dass dem Datenstrom des Übertragungskanals (FECC) im Rahmen der Manipulation erforderliche Rückmeldungen für die Signalquelle beigefügt werden.

9. Verfahren nach einem der vorhergehenden Ansprüche, **dadurch gekennzeichnet, dass** die Datenquelle (D) die auf dem Übertragungskanal beruhende Manipulierbarkeit über einen Videokanal des Videokonferenzsystems signalisiert.

10. Anordnung zum Anbinden zumindest einer Mensch-Maschine-Schnittstelle (SYSTEM_A; T; M) zur Manipulation, insbesondere Fernmanipulation, von zumindest einer im Rahmen von Videokonferenzen mit einem Videokonferenzsystem verbundenen Datenquelle (D), **dadurch gekennzeichnet, dass** von der Mensch-Maschine-Schnittstelle generierte Signale zur Manipulation von Applikationsdaten, die in der Datenquelle (D) gespeichert sind und die die Konferenzteilnehmer gemeinsam bearbeiten können, über einen für die Steuerung einer Videokamera vorgesehenen Übertragungskanal,'der gemäß einem "Far End Camera Control" (FECC) Protokoll betrieben wird, an das Videokonferenzsystem übermittelt werden.

## Claims

1. Method for connecting at least one man-machine interface (SYSTEM_A; T; M) for manipulating, in particular remotely manipulating, at least one data source (D) connected to a video conferencing system within the scope of video conferences, **characterised in that** signals generated by the man-machine interface for the manipulation of application data which is stored in the data source (D) and which can process the conference participants jointly, are transmitted to the video conferencing system by means of a transmission channel provided to control a video camera, wherein said channel is operated according to a "far end camera control" (FECC) protocol.

2. Method according to claim 1, **characterised in that** a man-machine interface (SYSTEM_A; T; M) assigned to the video conferencing system is used as the man-machine interface.

3. Method according to claim 1 or 2, **characterised in that** a man-machine interface (T; M) assigned to a participant terminal of the video conferencing system is used as the man-machine interface.

4. Method according to any one of claims 1 to 3, **characterised in that** a participant terminal (SYSTEM_A) of the video conferencing system is used as the man-machine interface.

5. Method according to any one of the preceding claims, **characterised in that** the transmission channel is operated with the help of the H.281 and / or H.224 protocol.

6. Method according to any one of the preceding claims, **characterised in that** the video conferencing system forwards the received signals to the at least one data source (D).

7. Method according to claim 6, **characterised in that** the signals are decoded by a decoding device (C/D2) assigned to the data source (D) in such a manner that the signals are extracted from a data flow transmitted on the transmission channel according to a transmission protocol of the transmission channel and used as a basis for the manipulation.

8. Method according to claim 7, **characterised in that** a coding device (C/D2) is assigned to the data source (D) in such a manner that necessary feedback for the signal source in the context of the manipulation are attached to the data flow of the transmission channel (FECC).

9. Method according to any one of the preceding claims, **characterised in that** the data source (D) signals the manipulability based on the transmission channel by means of a video channel of the video conferencing system.

10. Arrangement for connecting at least one man-machine interface (SYSTEM_A; T; M) for manipulating, in particular remotely manipulating, at least one data source (D) connected to a video conferencing system within the scope of video conferences, **characterised in that** signals generated by the man-machine interface for the manipulation of application data which is stored in the data source (D) and which can process the conference participants jointly, are transmitted to the video conferencing system by means of a transmission channel provided to control a video camera, wherein said channel is operated according to a "far end camera control" (FECC) protocol.

## Revendications

1. Procédé servant à relier au moins une interface homme-machine (SYSTEM_A ; T ; M), servant à manipuler, en particulier à manipuler à distance, au moins une source de données (D) reliée, dans le cadre de visioconférences, à un système de visioconférence, **caractérisé en ce que** des signaux produits par l'interface homme-machine servant à manipuler des données d'application, lesquels signaux sont enregistrés dans la source de données (D) et que les participants aux conférences peuvent traiter ensemble, sont transmis au système de visioconférence par l'intermédiaire d'un canal de transmission prévu pour la commande d'une caméra vidéo, lequel canal fonctionne selon le protocole de commande de caméra FECC (Far End Camera Control)

2. Procédé selon la revendication 1, **caractérisé en ce qu'**on utilise comme interface homme-machine une interface homme-machine (SYTEM_A ; T ; M) associée au système de visioconférence.

3. Procédé selon la revendication 1 ou 2, **caractérisé en ce qu'**on utilise comme interface homme-machine une interface homme-machine (T ; M) associée à un appareil terminal de participant du système de visioconférence.

4. Procédé selon l'une quelconque des revendications 1 à 3, **caractérisé en ce qu'**on utilise comme interface homme-machine un appareil terminal de participant (SYSTEM_A) du système de visioconférence.

5. Procédé selon l'une quelconque des revendications précédentes, **caractérisé en ce que** le canal de transmission fonctionne à l'aide du protocole H.281 et/ou du protocole H.224.

6. Procédé selon l'une quelconque des revendications précédentes, **caractérisé en ce que** le système de visioconférence transfère à la source de données (D) au moins au nombre de une les signaux reçus.

7. Procédé selon la revendication 6, **caractérisé en ce que** les signaux sont décodés par un dispositif de décodage (C/D2) associé à la source de données (D) de telle manière que les signaux sont extraits d'un flux de données transmis sur le canal de transmission selon un protocole de transmission du canal de transmission et sont à la base de la manipulation.

8. Procédé selon la revendication 7, **caractérisé en ce qu'**un dispositif de codage (C/D2) est associé à la source de données (D) de telle manière que les messages en retour requis dans le cadre de la manipulation pour la source de signaux sont joints au flux de données du canal de transmission (FECC).

9. Procédé selon l'une quelconque des revendications précédentes, **caractérisé en ce que** la source de données (D) signale, par l'intermédiaire d'un canal vidéo du système de visioconférence, la possibilité de manipulation reposant sur le canal de transmission.

10. Ensemble servant à relier au moins une interface homme-machine (SYTEM_A ; T ; M) servant à manipuler, en particulier à manipuler à distance, au moins une source de données (D) reliée dans le cadre de visioconférences à un système de visioconférence, **caractérisé en ce que** des signaux produits par l'interface homme-machine servant à manipuler des données d'application, lesquels signaux sont enregistrées dans la source de données (D) et que les participants à une conférence peuvent traiter ensemble, sont transmis au système de visioconférence par l'intermédiaire d'un canal de transmission prévu pour la commande d'une caméra vidéo, lequel canal de transmission fonctionne selon le protocole de commande de caméra FECC (Far End Camera Control).
